Europäisches Patentamt

European Patent Office

Office européen des brevets

(19)

(11) Publication number: **0 424 651 A1**

## (12) EUROPEAN PATENT APPLICATION

(21) Application number: **90117479.7**

(22) Date of filing: **11.09.90**

(51) Int. Cl.⁵: **G01T 1/17**

The application is published incomplete as filed (Article 93 (2) EPC). The point in the description at which the omission obviously occurs has been left blank.

(30) Priority: **22.09.89 US 411346**

(43) Date of publication of application:
**02.05.91 Bulletin 91/18**

(84) Designated Contracting States:

FR GB IT NL SE

(71) Applicant: **Siemens Aktiengesellschaft**
**Wittelsbacherplatz 2**
**W-8000 München 2(DE)**

(72) Inventor: **Arseneau, Roger E.**
**762 White Pine Road**
**Buffalo Grove, Illinois 60098(US)**

(54) **Method and apparatus for unpiling pulses generated by piled-up scintillation events.**

(57) A signal containing piled-up pulses (1,2) from a scintillation camera head is sampled at a high frequency. Samples are summed to provide a time-integration of pulses (1,2) which are sampled. When pulses (1,2) pile up, the tail of the first pulse (1) can be determined by extrapolation, permitting the first pulse (1) to be energy-validated. The opverlapping tail of the first pulse (1) and the head of the second pulse (2) are also time-integrated, and the area of the tail of the first pulse (1) is substracted from the time-integration so obtained. It is then possible to validate the second pulse (2).

FIG 7

EP 0 424 651 A1

# MEHTOD AND APPARATUS FOR UNPILING PULSES GENERATED BY PILED-UP SCINTILLATION EVENTS

## BACKGROUND OF THE INVENTION

### 1. Field of the Invention

The invention relates to a method and circuit for processing pulses in pulse pile-up situations. In particular, the invention relates to a method and circuit for processing pulses derived from a radiation detector, such as a scintillation gamma camera.

### 2. Description of the Prior Art

The US Patent 3,984,689 (Arseneau) describes a scintillation camera for high activity sources which comprises a circuit for dumping both the preceding and the succeeding pile-up pulse in cases of detected pulse pile-up situations.

The commonly owned patent application Serial No. 471,915 entitled "A Method and a Circuit for Processing Pulses of a Pulse Train" filed March 3, 1983 by Franciscus J. Dirkse et al., described a method and circuit for processing in pulse pile-up situations where both the preceding pulse and the succeeding piled-up pulse are processed by adding or subtracting pulse tails simulated in RC circuits.

The commonly owned patent application Serial No. 593,020 entitled "Radiation Detector Circuit with Real Time Photon Counting" filed March 26, 1984 by Dennis E. Persyk et al., describes a method and circuit for processing pulses in pulse pile-up situations on the basis of real time photon counting.

## SUMMARY OF THE INVENTION

### 1. Objects

It is an object of this invention to provide a method and circuit for processing pulses in pulse pile-up situations where both a preceding pulse and a succeeding pile-up pulse can be processed with highest accuracy.

It is another object of the invention to provide a method and circuit for digitally processing pulses in pulse pile-up situations with highest accuracy.

It is still another object of this invention to provide a method and circuit for digitally processing pulses derived from a radiation detector, such as a scintillation gamma camera, in pulse pile-up situations with highest accuracy.

### 2. Summary

According to this invention a method for digitally processing pulses in pulse pile-up situations is provided which comprises the steps of
a) sampling each pulse with a second frequency which is a subfrequency of a first frequency;
b) measuring the start time of sampling dependent on the first and second frequencies;
c) storing the number of samples;
d) measuring the start time of a pile-up pulse dependent on the first and second frequencies;
e) correcting each pulse to be processed preceding a pile-up pulse by adding remaining tail samples dependent on the start time of sampling, the stored number of samples of the pulse until the last sample prior to the occurrence of a pile-up pulse and the stored number of samples of a previously sampled pulse; and
f) correcting each pile-up pulse by subtracting the tail samples added to the preceding pulse dependent on the measured start time of the pile-up pulse, the number of samples of the pile-up pulse and the number of samples of the preceding pulse prior to the starting time of the pile-up pulse.

Also, according to this invention a circuit for processing pulses in pulse pile-up situations is provided which comprises
a) means for sampling each pulse with a second frequency which is a subfrequency of a first frequency;
b) means for measuring the start time of sampling dependent on the first and second frequencies;
c) means for storing the number of samples;
d) means for measuring the start time of a pile-up pulse dependent on the first and second frequencies;
e) means for correcting each pulse to be processed preceding a pile-up pulse by adding remaining tail samples dependent on the start time of sampling, the stored number of samples of the pulse until the last sample prior to the occurrence of a pile-up pulse and the stored number of samples of a previously sampled pulse; and
f) means for correcting each pile-up pulse by subtracting the tail samples added to the preceding pulse dependent on the measured start time of the pile-up pulse, the number of samples of the pile-up pulse and the number of samples of the preceding pulse prior to the starting time of the pile-up pulse.

Measuring the start times of pulses dependent on first and second frequencies according to the invention guarantees exact time information, especially with respect to the occurrence time of pile-up pulses between two succeeding samples. Under these circumstances, the invention allows for processing pulses in pulse pile-up situations where both a preceding pulse and a succeeding pile-up pulse can be processed with highest accuracy. Also, a digitally processing with highest accuracy is possible. Therefore, the invention is particularly applicable for digitally processing pulses derived from a radiation detector, such as a scintillation gamma camera.

In a special embodiment of the invention a third frequency is generated as a subfrequency of the first frequency and the start time of sampling and the start time of a pile-up pulse are measured dependent on the first, second and third frequencies. The third frequency lies between the first and second frequencies.

Another special embodiment of the invention further comprises the steps of:

a) generating a start pulse at the occurrence of a pulse to be processed;

b) generating a first pulse series having a first pulse repetition frequency at the occurrence of the start pulse;

c) generating from the first pulse series a second pulse series having a second pulse repetition frequency which is a subfrequency of the first pulse repetition frequency; and

d) sampling the pulse with the second pulse repetition frequency.

In still· another special embodiment of the invention the start time of sampling is measured by measuring the status of the first and second pulse series at the occurrence of the start pulse and the start time of a pile-up is measured by measuring the status of the first and second pulse series at the occurrence of the pile-up pulse. Also a pulse pile-up signal is generated at the occurrence of a pile-up pulse and the start time of a pile-up pulse is measured by measuring the status of the first and second pulse series at the occurrence of the pulse pile-up signal.

The foregoing and other objects, features and advantages of the invention will be apparent from the following more particular description of a preferred embodiment of the invention, as illustrated in the accompanying drawings.

## BRIEF DESCRIPTION OF THE DRAWINGS

In the drawings:

Fig. 1 is a schematic circuit diagram comprising an analog circuit portion (Fig. 1A) and a digital circuit portion (Fig. 1B) of a digital scintillation gamma camera including the invention;

Fig. 2 is a more detailed circuit diagram of the inner structure of a digital integrator as shown in Fig. 1B;

Fig. 3 is a more detailed circuit diagram of the inner structure of the signal processing circuit in Fig. 1B;

Fig. 4 is a more detailed circuit diagram of the inner structure of the integrator control circuit as shown in Fig. 1B;

Fig. 5 is a pulse diagram illustrating a pulse pile-up situation;

Fig. 6 is a more detailed circuit diagram of the inner structure of the pulse pile-up detector circuit in Fig. 1B;

Fig. 7 is a still more detailed circuit diagram of the inner structure of the pulse pile-up detector circuit according to Fig. 6;

Fig. 8 is a more detailed circuit diagram of the inner structure of the position calculator in Fig. 3;

Fig. 9 is a diagram showing data information processed in the position calculator of Fig. 8;

Fig. 10 is a more detailed circuit diagram of the inner structure of the ZLC calculator in Fig. 3; and

Fig. 11 is a more detailed circuit diagram of the inner structure of the dynamic threshold generator in Fig. 1A.

## DETAILED DESCRIPTION OF THE PREFERRED EMBODIMENT

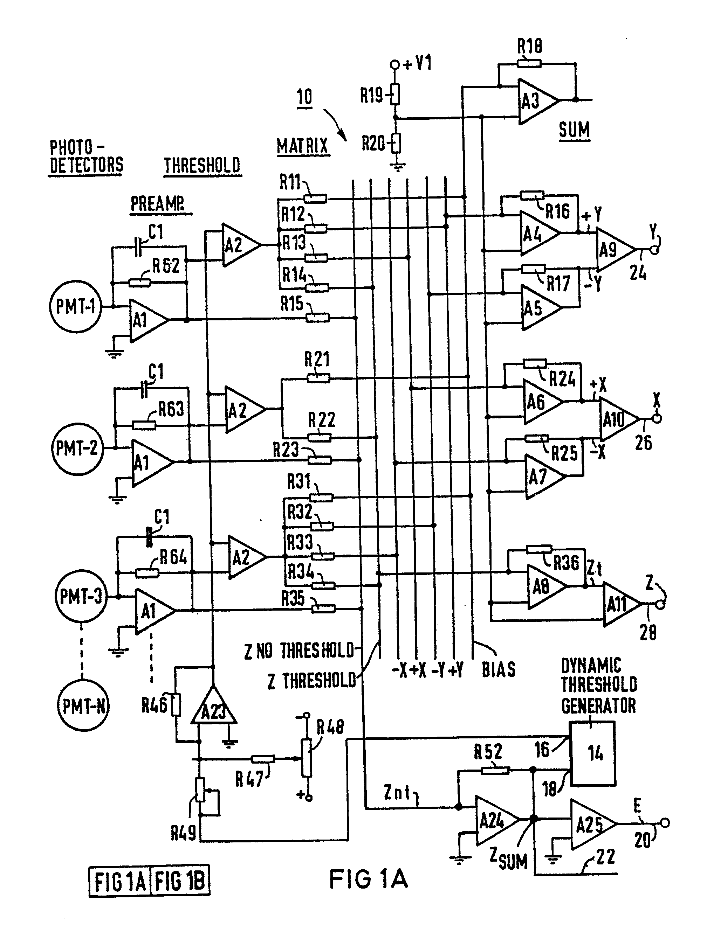

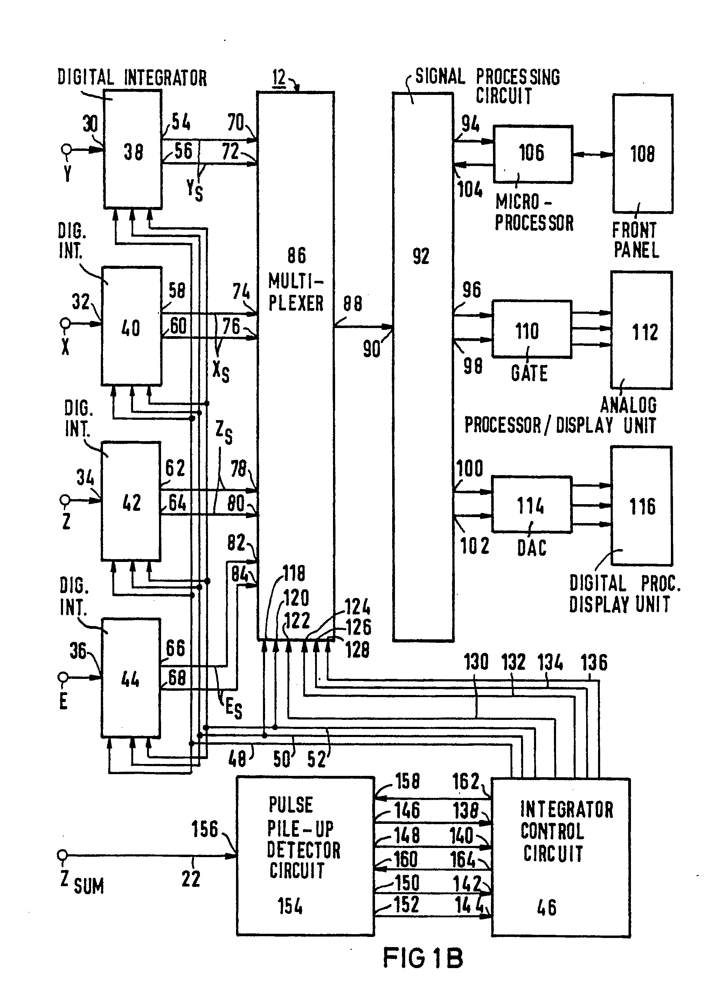

Fig. 1 illustrates in a schematic circuit a digital scintillation gamma camera which comprises an analog circuit portion 10, (Fig 1A) and a digital circuit portion 12 (Fig. 1B).

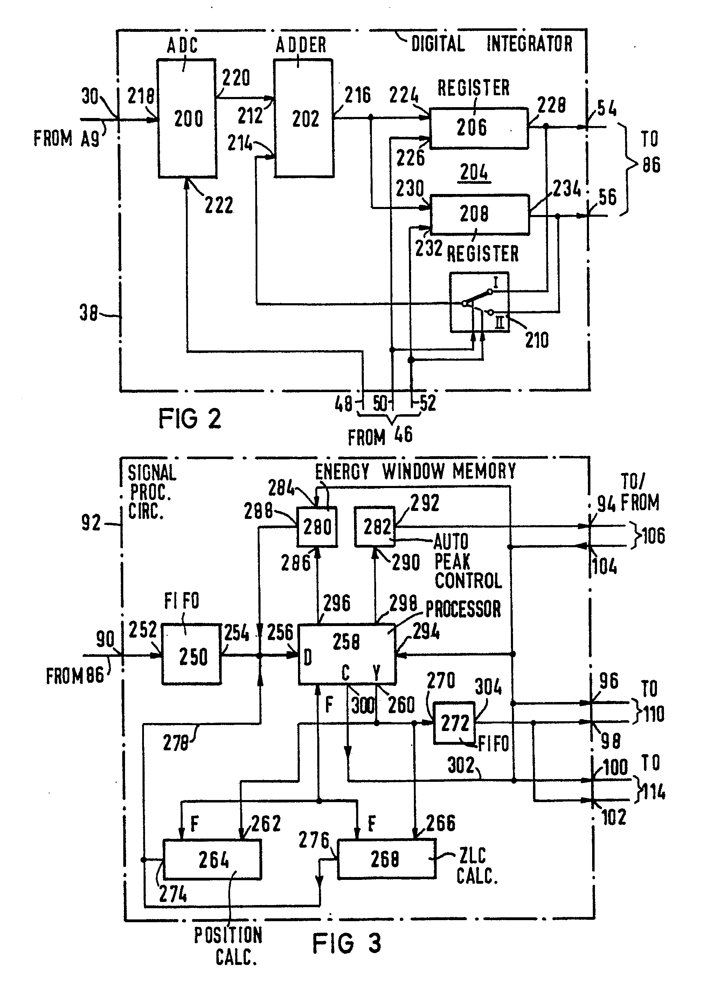

According to Fig. 1A (which is very similar to Fig. 2A of the aforementioned US Patent 3,984,689) the analog circuit portion 10 comprises a number N (e.g. N = 19-37) of photomultiplier tubes PM-1 to PM-N which are arranged in a hexagonal array behind a (not shown) scintillation crystal. The outputs of the photomultiplier tubes are connected in conventional manner via preamplifiers A1 and threshold amplifiers A2 with a matrix of weighting resistors (e.g. only R11 through R35 are indicated for the first three photomultiplier tubes PM-1, PM-2, PM-3). Each preamplifier A1 comprises a feedback loop with a capacitor C1 and an ohmic resistor R62, R63, R64, etc.

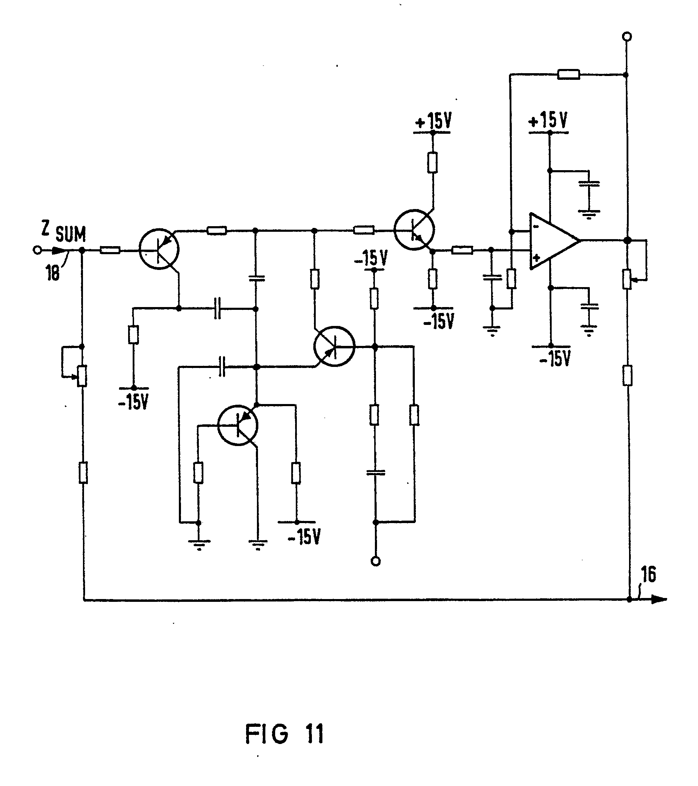

The thresholds of the threshold amplifiers A2 can be adjusted by means of amplifier circuit A23, R46, R47, R48, R49 and dynamic threshold generator 14 (which is illustrated in more detail in Fig. 11) via threshold generator output 16. An input 18 of the dynamic threshold generator 14 is connected with the output of amplifier A24 which comprises feedback resistor R52. The output signal of amplifier A24 is the total energy signal $Z_{sum}$. The amplifier input signal is the no threshold energy output signal $Z_{nt}$ of the resistor matrix.

The total energy signal $Z_{sum}$ is also supplied to a buffer amplifier A25 having an output 20 and to a signal line 22. The energy signal at the output 20 of the buffer amplifier A25 is generally designated with E.

The output signals ±X, ±Y and $Z_t$ of the resistor matrix are supplied via amplifiers A4 to A8 (having feedback resistors R16, R17, R24, R25, R36 and being biased by means of biasing circuit A3, R18, R19, R20) to summing amplifiers A9, A10, A11 for generating analog position coordinate signals X and Y at outputs 24, 26 and an analog threshold energy signal Z at output 28.

As illustrated in Fig. 1B the position coordinate signals Y, X, and the threshold energy signal Z at the outputs 24, 26, 28 of summing amplifiers A9, A10, A11 and the energy signal E at output 20 of buffer amplifier A25 are supplied to inputs 30, 32, 34 and 36 of a first digital integrator 38, a second digital integrator 40, a third digital integrator 42 and a fourth digital integrator 44, respectively. Each digital integrator 38, 40, 42 and 44 (which comprises an input analog-to-digital converter as will be described in more detail with respect to Fig. 2) together with an integrator control circuit 46 forms an integrator circuit. The integrator control circuit 46 is connected with each digital integrator 38, 40, 42 and 44 by means of a first output bus 48, a second output bus 50 and a third output bus 52.

A first and second outputs 54, 56 for the digitally integrated position coordinate signal $Y_s$ of integrator 38, a first and second outputs 58, 60 for the digitally integrated position coordinate signal $X_s$ of integrator 40, a first and second outputs 62, 64 for the digitally integrated threshold energy signal $Z_s$ of integrator 42 and a first and second outputs 66, 68 for the digitally integrated energy signal $E_s$ of the digital integrator 44 are connected with corresponding inputs 70 to 84 of a multiplexer 86. An output 88 of the multiplexer 86 is connected with the input 90 of a signal processing circuit 92. The signal processing circuit 92 comprises outputs 94 to 102 and a further input 104.

The outputs 94 and the further input 104 of the signal processing circuit 92 are connected via a microprocessor 106 with the front panel 108 of the scintillation gamma camera control unit (not shown) for communication. The outputs 96 and 98 of the signal processing unit 92 are connected via gate 110 with a digital processing and/or display unit 112 and the outputs 100 and 102 are connected via a digital-to-analog converter 114 with an analog processing and/or display unit 116.

The multiplexer 86 comprises further inputs 118 to 128. The inputs 118, 120 are connected with the second and third output buses 50 and 52, respectively, of the integrator control circuit 46. The inputs 122, 124, 126 and 128 are connected with a fourth, fifth, sixth and seventh output buses 130, 132, 134 and 136 of the integrator control circuit 46, respectively.

The integrator control circuit 46 also comprises inputs 138 to 144 which are connected with outputs 146-152 of a pulse pile-up detector circuit 154. A first input 156 of the pulse pile-up detector circuit 154 is connected via line 22 with the output of amplifier A24 (Fig. 1A). This first input 156 therefore receives the total energy signal $Z_{sum}$ of the analog circuit portion 10 of Fig. 1A. The pulse pile-up detector circuit 154 also comprises a second input 158 and a third input 160 which are connected with further outputs 162 and 164 of the integrator control circuit 46.

Fig. 2 illustrates in more detail the internal structure of the first digital integrator 38. The second, third and fourth digital integrators 40, 42 and 44 in Fig. 1B have the same structure, respectively.

According to Fig. 2 the integrator 38 comprises an analog-to-digital converter 200. It further comprises a digital added 202 and a digital storing device 204. The digital storing device 204 includes a first digital register 206, a second digital register 208 and a switch 210 (selector switch).

The digital adder 202 comprises a first digital input 212 and a second digital input 214. It further has a digital output 216.

The analog-to-digital converter 200 includes an input 218 and an output 220. It further includes a control input 222.

The first digital register 206 comprises a digital input 224, an enable input 226, and a digital output 228. In the same manner the second digital register 208 contains a digital input 230, an enable input 232 and a digital output 234.

According to Fig. 2 the output 220 of the analog-to-digital converter 200 is connected with the first digital input 212 of the digital adder 202. The second digital input 214 of the digital adder 202 is connected with the digital output 228 of the first digital register 206 when switch 210 is in switch position I. The second digital input 214 of the digital adder 202 is connected with the digital output 234 of the second digital register 208 when the switch 210 is in position II.

The digital output 216 of the digital adder 202 is connected with both the digital input 224 of the first digital register 206 and the digital input 230 of the second digital register 208. By enabling the first digital register 206 via enable input 226 an non enabling the second digital register 208 the first digital register 206 takes over digital data from digital adder 202. By enabling the second digital register 208 via enable input 232 and non enabling the first digital register 206, the second digital register 208 correspondingly takes over digital information from digital adder 202.

The first and second digital registers 206 and 208 are alternatingly enabled on an event to event basis by integrator control circuit 46 via second and third output buses 50, 52 for time period which correspond with the time periods being necessary for integrating a radiation event. For example the enabling time period for each digital register 206 or 208 is approximately 700 ns. However, in case of a pulse pile-up situation an earlier switching from one register to the other one is triggered by the integrator control 46 as will be described later in more detail.

The digital outputs 228 and 234 of the first and second digital registers 206 and 208 are switched simultaneously by switch 210.

That means that in time periods where the first digital register 206 is enabled, the digital output 228 of the first digital register 206 is connected with the second digital input 214 of the digital adder 202. Therefore the digital output signals of enabled first digital register 206 during first register enable time period are refed via second digital input 214 to the digital adder 202 for being added to a succeeding digital signal delivered from output 220 of the analog-to-digital converter 200 to the digital adder 202 via first digital input 212.

Correspondingly, in time periods where the second digital register 208 is enabled, the digital output 234 of this register 208 is switched to the second digital input 214 of the digital adder 202. The digital output signals of the second digital register 208 are now added in digital adder 202 to succeeding digital output signals of the analog-to-digital converter 200.

The sample rate of the analog-to-digital converter 200 which is controlled by the integrator control circuit 46 via bus 48 is for example 30 MHz, i.e. approximately 21 samples for a normal unpiled event. The number of samples can be decreased for the reason of detection of a pulse pile-up which will be explained later in more detail.

The digital output signals of the first and second digital registers 206, 208 are also supplied to integrator outputs 54 and 56 (register read out outputs) and from there via multiplexer 86 to the signal processing circuit 92 for further processing.

Therefore, alternatively in time periods where one register is fed with new information from digital adder 202 the other register can be read out via its associated read out output 54 or 56.

Fig. 3 depicts the signal processing circuit 92 in more detail. According to Fig. 3 the signal processing circuit 92 comprises in line with its input 90 a first in/first out memory 250 (FIFO) which has a signal input 252 and a signal output 254. The signal output 254 of the FIFO 250 is connected with the data bus input 256 of a high speed processor 258. The data bus output 260 of the high speed processor 258 is connected with data bus input 262 of a position calculator 264, data bus input 266 of a ZLC calculator 268 and data bus input 270 of another first in/first out memory 272 (FIFO). The data bus output 274 of the position calculator 264 and the data bus output 276 of the ZLC calculator 268 are connected via bus 278 with the data bus input 256 of the high speed processor 258.

The signal processing circuit 92 also comprises an energy window memory 280 and an auto peak control unit 282 for calibrating purposes. The energy window memory 280 has a first data bus input 284, a second data bus input 286 and a data bus output 288. The auto peak control unit 282 has a data bus input 290 and a data bus output 292.

According to Fig. 3 the first data bus input 284 of the energy window memory 280 is connected with input 104 and the output 292 of the auto peak control unit 282 is connected with output 94 of the signal processing circuit 92. Input 104 of the signal processing circuit is also connected with another input 294 of the high speed processor 258. Under these circumstances the high speed processor 258, the energy window memory 280 and the auto peak control unit 282 are able to communicate with the front panel 108 via microprocessor 106.

The second data input 286 of the energy window memory is connected with a further output 296 of the high speed processor 258. The data bus input 290 of the auto peak control unit 282 is also connected with still another output 298 of the high speed processor 258. Furthermore, the data bus output 288 of the window memory 280 is connected with the data bus input 256 of the high speed processor 258.

The high speed processor 258 also comprises a clock output 300 with clock transmission line 302.

The data bus output 304 of the FIFO 272 is connected with outputs 98 and 102 of the signal processing circuit 92.

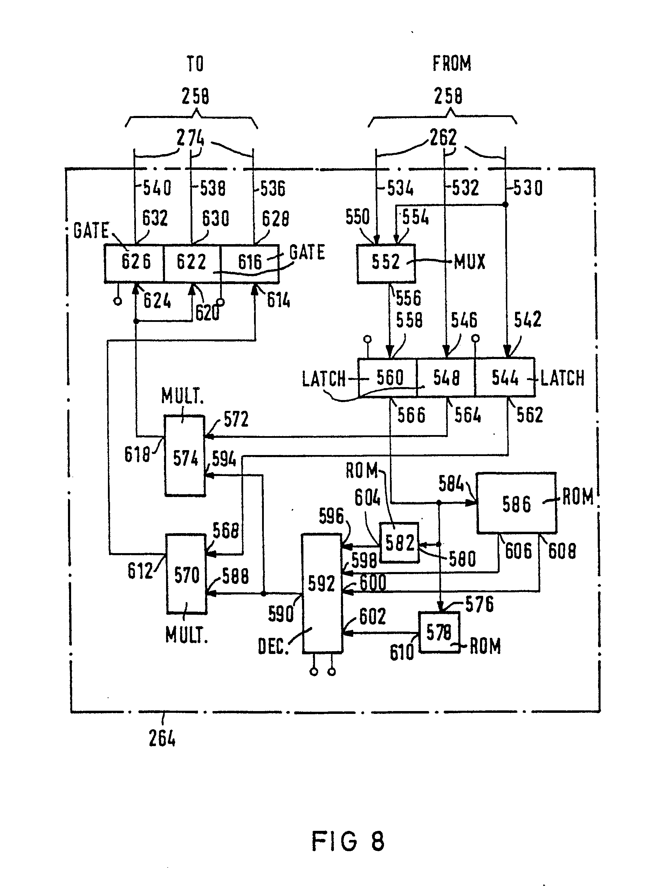

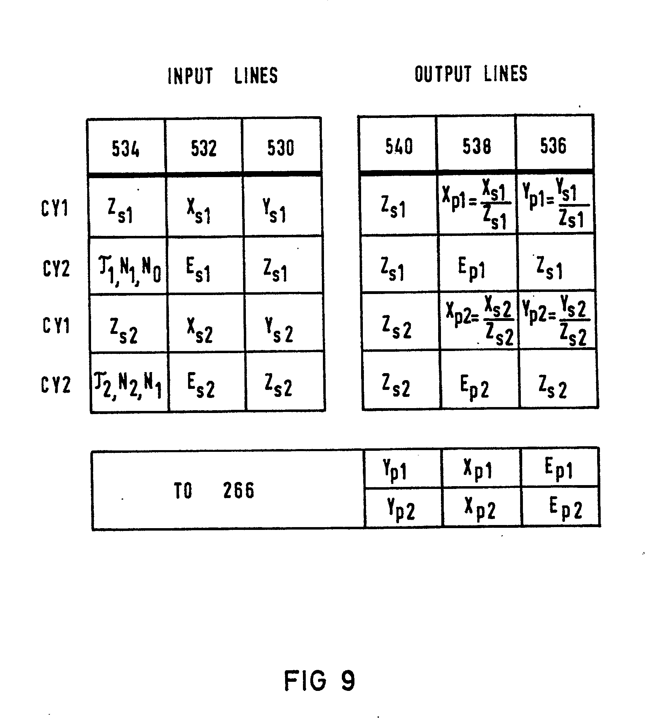

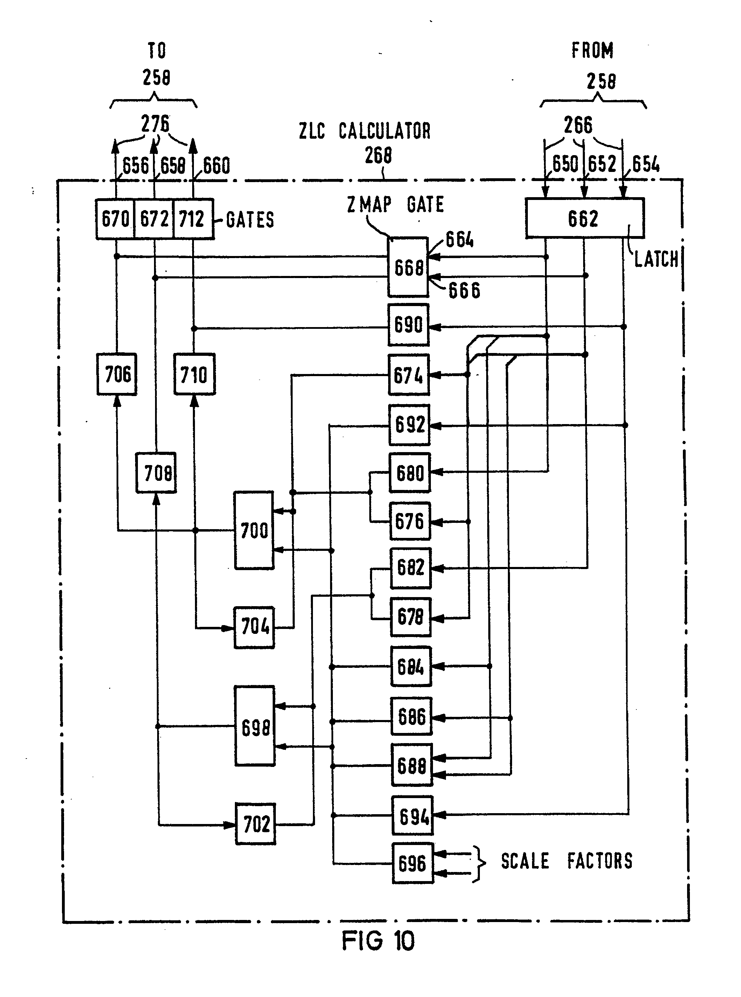

In the signal processing circuit according to Fig. 3 the FIFO 250 takes over output information from integrators 38, 40, 42 and 44 via multiplexer 86 and supplies it to the high speed processor 258 via data bus input 256. The data information leaving the high speed processor 258 at data bus output 260 is first fed to the position calculator 264 for position calculation and event correction (in case of pulse pile-up) as will be later described in more detail in connection with Figs. 8 and 9. The data information at data bus output 274 of the position calculator 264 is refed to the data bus input 256 of the high speed processor 258. The high speed processor 258 now transfers the data information to the ZLC calculator 268 via data bus input 266 for digital energy and position coordinate linearity correction in the manner as described for example for analog processing in US Patent 4,298,944 (Stoub et al.), 4,316,257 (Del Medico et al.) and 4,323,977 (Arseneau). The way the ZLC calculator 268 works will later be illustrated in more detail in connection with Fig. 10.

After data correction in the ZLC calculator 268 the corrected data is again refed from data bus output 276 of the ZLC calculator 268 to the high speed processor 258 via data bus input 256. The high speed processor 258 then supplies the data to FIFO 272 via data bus output 260. From FIFO 272 the data is then fed to outputs 98 and 102 of the signal processing circuit 92 for being transferred to the digital processing and/or display unit 112 via gate 110 and the analog processing and/or display unit 116 via digital-to-analog converter 114.

During each resupply of an E energy signal data the high speed processor 258 checks whether or not the signal data lies within the energy window (stored in digital numbers for energy range) of the energy window memory 280. In case the signal data does not lie within the energy window the data is dumped as invalid. However, in case the signal data lies within the energy window it is further processed as a valid signal data.

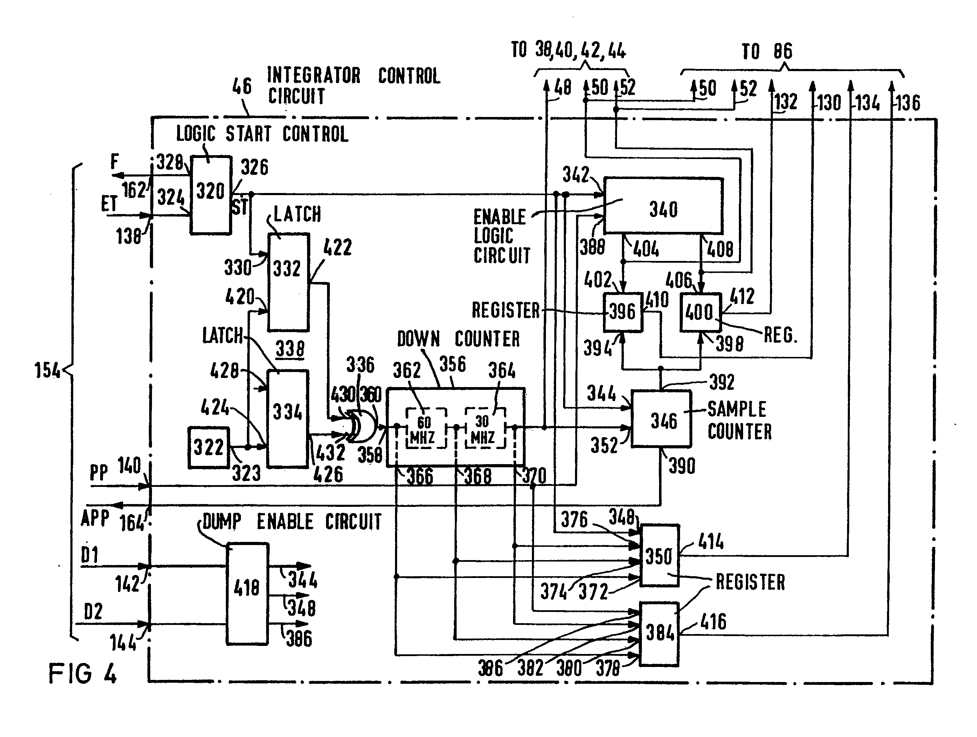

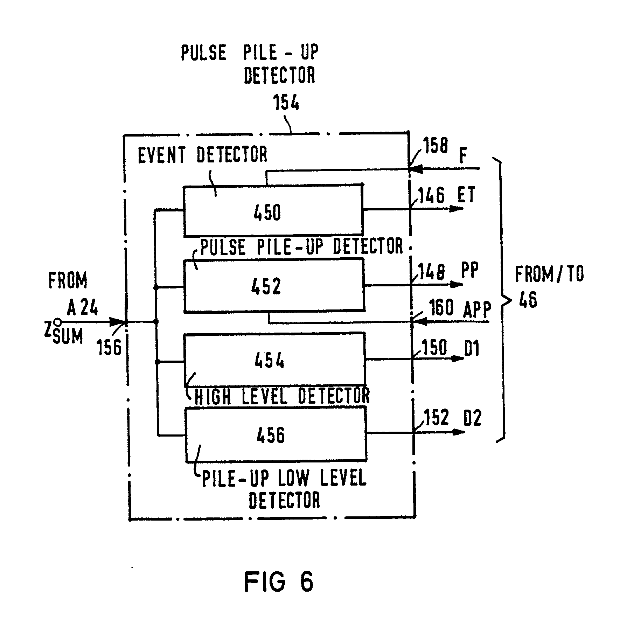

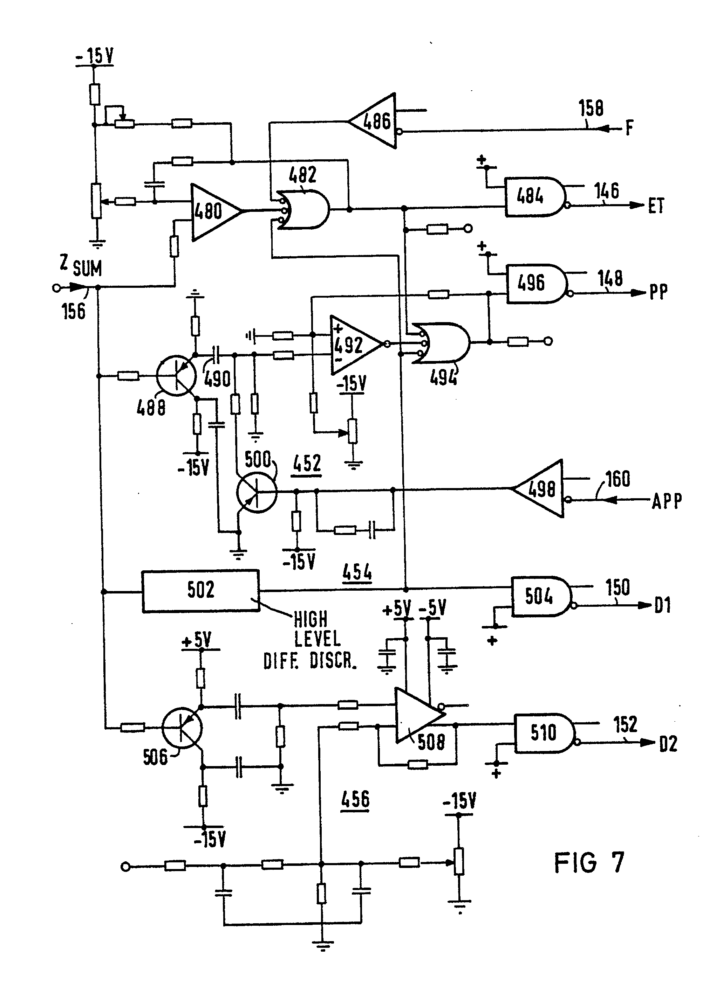

Fig. 4 shows a more detailed diagram of the inner structure of the integrator control circuit 46. According to Fig. 4 the integrator control circuit 46 comprises a logic start control 320 and a 120 MHz oscillator 322. The logic start control 320 has an input 324 which is connected with the input 138 of the integrator control circuit 46. The logic start control 320 also comprises a first output 326 and a second output 328. The second output 328 is connected with the output 162 of the integrator control circuit 46. The input signal at input 138 of the integrator control circuit 46 and thus also at input 324 of the logic start control 320 is an event trigger pulse ET which is generated when an occurring event exceeds a given threshold as will later be described in more detail in connection with Figs. 6 and 7. The signal at second output 328 of the logic start control 320 and therefore the signal at output 162 of the integrator control circuit 46 is a feed back pulse F generated by the logic start control 320 in response to an incoming event trigger pulse ET. The feed back pulse F holds the event trigger as will later be explained in more detail in connection with Figs. 6 and 7.

The logic start control 320 also produces a start pulses ST at its first output 326. This start pulse ST is supplied to the lead input 330 of a first transparent latch 332 which together with a second transparent latch 334 and an exclusive OR gate 336 forms a phase controlled gate 338 for the output signals of the 120 MHz oscillator 322. The start pulse ST of the logic start control 320 is also fed to an enable logic circuit 340 via input 342, to the reset input 344 of a sample counter 346 and to the enable intput 348 of a first register 350 for a subphase count.

The sample counter 346 comprises a counter input 352 which is connected with the counter output 354 of a down counter 356. The counter input 358 of the down counter 356 is connected with the output 360 of the exclusive OR gate 336.

The down counter 356 is subdivided in a 60 MHz portion 362 and a 30 MHz portion 364. It also comprises a 120 MHz output 366, a 60 MHz output 368 and a 30 MHz output 370. All three outputs 366-370 are connected with corresponding 120 MHz, 60 MHz and 30 MHz inputs 372, 374 and 376 of the first register 350 for a subphase count. They are also connected with corresponding 120 MHz, 60 MHz and 30 MHz inputs 378, 380 and 382 of a second register 384 for the subphase count. The enable input 386 of a second register 384 for the subphase count is connected with input 140 of the integrator control circuit 46. At this input 140 a pulse pile-up detection signal PP appears in a pulse pile-up situation.

The input 140 of the integrator control circuit 46 is also connected with an input 388 of the enable logic circuit 340.

The sample counter 346 comprises a first counter output 390 and a second counter output 392. The first counter output 390 is connected with the output 164 of the integrator control circuit 46. The sample counter 346 generates an activating signal APP for pulse pile-up detection as will later be more described in connection with Figs. 6 and 7. The activating signal APP is supplied from output 164 of the integrator control circuit 46 to the pulse pile-up detector circuit 154.

The second counter output 392 of the sample counter 346 is connected with the input 394 of a first register 396 for the sample count and with the input 398 of a second register 400 for the sample count. The first register 396 for the sample count has an enable input 402 which is connected with the first output 404 of the enable logic circuit 340. Correspondingly, the second register 400 for the sample count has an enable input 406 which is connected with a second output 408 of the enable logic circuit 340. The first output 404 of the enable logic circuit 340 is also connected with the output bus 50 of the integrator control circuit 46. Correspondingly, the second output 408 of the enable logic circuit 340 is connected with the output bus 52 of the integrator control circuit 46.

Each register 396 and 400 for the sample count has also an output 410, 412, respectively. The output 410 of the first register 396 for the sample count is connected with the output bus 130 of the integrator control circuit 46. The output 412 of the second register 400 for the sample count is connected with the output bus 132 of the integrator control circuit 46.

The 30 MHz output 354 of the down counter 356 is also connected with output bus 48 of the integrator control circuit 46. Furthermore, the first register 350 for the subphase count comprise an output 414 which is connected with output bus 134 of the integrator control circuit 46. Accordingly, the second register 384 for the subphase count has an output 416 which is connected with the output bus 136 of the integrator control circuit 46.

The integrator control circuit 46 also comprises input 142 for a first dumping signal D1 and input 144 for a second dumping signal D2. The dumping signals D1 and D2 are supplied to a dump enable circuit for resetting the sample counter 346 and the first register 350 and the second register 384 for the subphase counts in case of the occurrence of an event which has an abnormal high level (dumping signal D1) and in case of the occurrence of a pile-up pulse which has a relatively low level (dumping signal D2).

In Fig. 4 the first transparent latch 332 comprises a signal input 420 and a signal output 422. Accordingly, the second transparent latch 334 comprises a signal input 424 and a signal output 426. It also comprises a lead input 428. The signal inputs 420 of the first transparent latch 332 and the signal input 424 of the second transparent latch 334 are connected with the output 323 of the 120 MHz oscillator 322. The signal output 422 of the first transparent latch 332 is connected with a first input 430 of the exclusive OR gate 336. Accordingly, the signal output 426 of the second transparent latch is connected with a second input 432 of the exclusive OR gate 336.

The operation of the integrator control circuit 46 according to Fig. 4 is as follows:

As mentioned before, each radiation event which exceeds a threshold level (for eliminating noise) generates an event trigger pulse ET. The event trigger pulse ET triggers the logic start control 320 to generate a start pulse ST.

The phase controlled gate 338 works such that the signal at output 422 of the first transparent latch 332 is always opposite to the signal at output 426 of the second transparent latch 334. When a start pulse ST in response to an event trigger pulse ET appears at lead input 330 of the first transparent latch 332 the phase controlled gate 338 becomes conductive for output signals of the 120 MHz oscillator 322 such that the next phase change of the 120 MHz oscillator 322 will cause a positive edge at output 360 of the exclusive OR gate 336 independent on the oscillator pulse polarity. This means the down counter 356 always starts under the same initial conditions at the occurrence of an event trigger pulse ET. The time information of the initial condition is memorized in the first register 350 for the subphase count which has been enabled at enable input 348 by means of the start pulse ST of the logic start control 320.

The 30 MHz output signal at output 354 of the down counter 356 is transferred via output bus 48 of the integrator control circuit 46 to the analog-to-digital converters 200 in the digital integrators 38-44. This causes each analog-to-digital converter 200 to sample the incoming event at a 30 MHz rate which means about 21 samples per event as mentioned before.

The 30 MHz output signals of down counter 356 are also supplied to sample counter 346 via counter input 352. After a certain number of counts, for example 10 counts, the sample counter 346 generates an activating signal APP for pulse pile-up detection at its first counter output 390. The pulse pile-up detector circuit 154 is now enabled for detecting a pulse pile-up situation, if there succeeds any.

The start pulse ST of the logic start control 320 resets the sample counter 346 via reset input 344 always at the occurrence of an event trigger pulse ET. At the same time the start pulse ST triggers the enable logic circuit 340 via input 342 to generate an enabling signal at output 404 or 408. For example, a first start pulse ST at the occurrence of a first event trigger pulse ET triggers the enable logic circuit 340 to produce an enable signal at the first output 404, the second start pulse ST at the occurrence of a second event trigger pulse ET triggers the enable logic circuit 340 to generate an enable signal at second output 408 a third start pulse ST at the occurrence of a third event trigger pulse ET triggers the enable logic circuit 340 to generate an enable signal again at first output 404, etc. According to alternatingly generating enable signals at first and second outputs 404 and 408 the first and second registers 206 and 208 in each digital integrator 38-44 are alternatingly enabled via output buses 50 and 52 and enable inputs 226 and 232, as previously described. Correspondingly, switch 210 in each digital integrator 38 to 44 is alternatingly switched from position I to position II.

The enable signals at outputs 404 and 408 of the enable logic circuit 340 also enable the first and second registers 396, 400 for the sample count via enable inputs 402 and 406 to alternatingly take over count information from sample counter 346 via inputs 394 and 398. For example, for the first event the first register 396, for the second event the second register 400, for a third event again the first register 396 etc., takes over the count information from sample counter 346. The contents of registers 396 and 400 can be read out alternatingly on demand of FIFO 250 in the signal processing circuit 92 via output buses 130 and 132 of the integrator control circuit 46 and multiplexers 86.

The enable logic circuit 340 works on an event to event basis in 700 ns time periods (time which is approximately needed for the integration of one event) as long as their does not occur a pulse pile-up situation.

In case a second event is piled-up on a first event in a pulse pile-up situation succeeding a pulse pile-up detection activating signal APP at output 164 of the integrator control circuit 46, a pulse pile-up detection signal PP is supplied to input 140 of the integrator control circuit 46. The pulse pile-up detection signal PP triggers the enable logic circuit 340 via input 388 to change the enable signal output situation. For example, when at the occurrence of the pulse pile-up detection signal PP an enable signal has been generated at the first output 404 of the enable logic circuit 340 the enable logic circuit 340 now switches from the first output 404 to the second output 408 to generate an enable signal at the second output 408 instead of the first output 404. Accordingly, the first register 206 in each digital integrator 38 to 44 becomes disabled and instead the second register 208 becomes enabled. Also switch 210 in each digital integrator is switched from position I to position II. The digital output signals of the adder 202 are now supplied to the second register 208 and the output signals of the second register 208 are supplied via switch 210 to the second digital input 214 of adder 202 for integration.

Simultaneously with the enable logic circuit 340 the pulse pile-up detection signal PP also enables the second register 384 for the subphase count via enable input 386 to memorize the output status of down counter 356 at outputs 366, 368 and 370 at the time of the occurrence of the pulse pile-up detection signal APP. In case the pile-up event remains on a low amplitude level a dumping signal D2 is generated at input 144 of integrator control circuit 46 and the sample counter 346 and the second register 384 for the subphase count are reset to dump the piled-up second (invalid) event. The preceeding (valid) event, however, continues to be processed in normal manner in the position calculator 264 of the signal processing circuit 92.

Under the circumstances described above, in an unpiled situation the first register 206 of each digital integrator 38, 40, 42 and 44 stores the information $Y_{s1}$, $X_{s1}$, $Z_{s1}$ and $E_{s1}$ of a first event respectively, and the second register 208 memorizes the digital information of $Y_{s2}$, $X_{s2}$, $Z_{s2}$ and $E_{s2}$ of a succeeding unpiled second event, respectively. Correspondingly, the first register 296 contains the sample count of sample counter 346 which belongs to the first event. The second register 400 contains the sample count of sample counter 346 which belongs to the unpiled second event. The first register 350 for the subphase count memorizes the starting times of the first and second events.

In a pulse pile-up situation the second register 384 for the subphase count memorizes the time of the occurrence of a pulse pile-up detection signal PP. Therefore, the output signal at output 416 of the second register 384 for the subphase count includes time information for the exact starting time of a second event piled-up on a first event.

In the pulse pile-up situation the status of registers 206, 208, 396 and 400 has been changed by means of enable logic circuit 340 at the occurrence of the pulse pile-up detection signal PP as described above. The information stored in the first registers 206 of the digital integrators 38, 40, 42 and 44 corresponds with the information $Y_{s1}$, $X_{s1}$, $Z_{s1}$ and $E_{s1}$ of the first event from starting time memorized in the first register 350 for the surface count until the starting time of the succeeding pile-up event. The first register 396 for the sample count of the integrator control circuit 46 contains the number of the last sample of the analog-to-digital converters 200 in each digital integrator 38, 40, 42 and 44 preceding the starting time of the succeeding piled-up event. The second registers 208 in the digital integrators 38, 40, 42 and 44 start at memorize the digital information $Y_{s2}$, $X_{s2}$, $Z_{s2}$ and $E_{s2}$ of the piled-up second event together with the cut off tail of the preceeding first event. Correspondingly, the second register 400 of the integrator control circuit 46 starts to memorize the number of counts for the piled-up event and the cut off tail of the preceeding event beginning with the count of sample counter 346 which succeeds the last count stored in the first register 396 for the sample count.

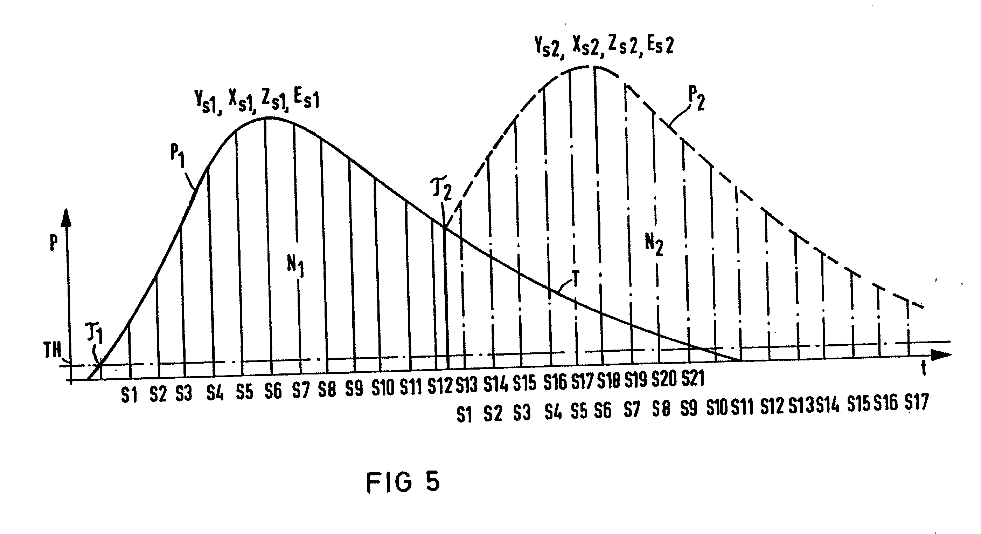

The pulse pile-up situation as previously described is illustrated in more detail in Fig. 5. Fig. 5 shows in a diagram the shape of radiation events P dependent upon time t. A first event $P_1$ is succeeded by a piled-up second event $P_2$. The noise threshold is indicated with TH. An event trigger pulse ET is generated at time $\tau_1$ and a pulse pile-up detection signal PP is generated at time $\tau_2$. The time $\tau_1$ is memorized in the first register 350 for the subphase count of the integrator control circuit

46. The time $\tau_2$ is memorized in the second register 384 for the subphase count of the integrator control circuit 46. As described above, the signals $Y_{s1}$, $X_{s1}$, $Z_{s1}$ and $E_{s1}$ are memorized in the first registers 206 of the digital integrators 38-44. Correspondingly, the signals $Y_{s2}$, $X_{s2}$, $Z_{s2}$ and $E_{s2}$ are going to be memorized in the second registers 208 of the digital integrators 38-44. The count number $N_1$ is memorized in the first register 396 and the count number $N_2$ is going to be memorized in the second register 400 of the integrator control circuit 46.

As indicated in Fig. 5 each event is subdivided in 21 samples S1 to S21. In case of first event $P_1$ the last sample prior to the occurrence of a pulse pile-up detection signal PP at time $\tau_2$ is the sample which is designated with the number S12. This number is stored in the first register 396 for the sample count of the integrator control circuit 46. The thirteenth sample S13 is the first sample of the piled-up event $P_2$ including the tail T of the first event $P_1$.

The $Y_{s1}$, $X_{s'}$, $Z_{s1}$ signal information of first event $P_1$ with cut off tail T is sufficient for ratio calculation of the coordinate position

$$Y_{p1} = \frac{Y_{s1}}{Z_{s1}} \text{ and } X_{p1} = \frac{X_{s1}}{Z_{s1}}$$

of the first event $P_1$ by means of the position calculator 264. However, the information with respect to energy signal $E_{s1}$ is incomplete. Nevertheless, the correct energy signal $E_{p1}$ of event $P_1$ can easily be reconstructed from incomplete $E_{s1}$ in the position calculator 264 by adding previously stored samples S13-S21 of an event $P_0$ preceeding event $P_1$. Under these circumstances, cut off tail T is added to $E_{s1}$ of event $P_1$ in the position calculator 264 for calculating the correct energy signal $E_p$.

Piled up event $P_2$ can be corrected correspondingly. The samples of tail T which are added to $E_{s1}$ of event $P_1$ now substracted from $E_{s2}$ of piled-up event $P_2$. The exact time for starting substraction is given by $\tau_2$.

For each event P the position coordinate signals $X_p$ and $Y_p$ are calculated in a first calculating cycle and the energy signals $E_p$ are calculated in a succeeding second cycle, as will later be explained in more detail in connection with Figs. 8 and 9.

Fig. 6 shows a more detailed circuit diagram of the inner structure of the pulse pile-up detector circuit 154 in Fig. 1B. According to Fig. 6 the pulse pile-up detector circuit 154 comprises an event detector 450, a pulse pile-up detector 452, a high level detector 454 and a pulse pile-up low level detector 456.

A still more detailed circuit diagram of the inner structure of the pulse pile-up detector circuit 154 according to Fig. 6 is illustrated in Fig. 7.

According to Fig. 7 the signal $Z_{sum}$ at input 156 is supplied to a threshold amplifier 480 for events which exceed the noise threshold TH. The output signal of the threshold amplifier 480 generates an event trigger pulse ET via gates 482 and 484. The feedback signal F is refed via amplifier 486 to gate 482. The event trigger pulse ET is held by means of the feedback signal F until the event at the input of the threshold amplifier 480 falls again below the noise threshold TH. The signal $Z_{sum}$ is also supplied to the base of transistor 488, the emitter of which is connected with one electrode of a capacitor 490. The other electrode of the capacitor 490 is connected via amplifier 492 and gates 494 and 496 with output 148 for the pulse pile-up detection signal PP. The capacitor 490 is biased by the activating signal APP for pulse pile-up detection via amplifier 498 and transistor 500. In a pulse pile-up situation an event piled-up on a preceeding event is detected by a potential change occurring in capacitor 490 in case the activating signal APP has already been applied to capacitor 490. The immediate result of the potential change in capacitor 490 is the pulse pile-up detection signal PP at output 148.

The signal $Z_{sum}$ is also supplied to a high level differential discriminator 502 which has a similar structure as the one described in columns 12 and 13 of Arseneau's US Patent 3,984,689. The high level differential discriminator 502 together with gate 504 forms the high level detector for high level events which have to be dumped.

Finally, the signal $Z_{sum}$ is also supplied to the base of transistor 506 which together with a threshold amplifier 508 and gate 510 forms the pulse pile-up lower level detector 456.

Referring now to Fig. 8, this figure shows a more detailed circuit diagram of the position calculator 264 in Fig. 3. The input lines 530, 532, 534 form together the data bus input 262 of the position calculator 264. Correspondingly the output lines 536, 538 and 540 form the data bus output 274 of the position calculator 264.

The input line 530 is connected with the input 542 of a first latch 544. The input line 532 is connected with the input 546 of a second latch 548. The input line 534 is connected with a first input 550 of a multiplexer 552 which has a second input 554 which is connected with the input line 530. The output 556 of the multiplexer is connected with the input 558 of a third latch 560.

The first, second and third latches 544, 548 and 560 have each an output 562, 564 and 566, respectively. Output 562 of the first latch 544 is connected with the first input 568 of a first multiplier 570. The output 564 of the second latch 548 is connected with a first input 572 of a second multiplier 574. The output 566 of the third latch 560 is connected with the input 576 of a first ROM 578, with the input 580 of a gate 582 and with the input 584 of a second ROM 586.

The first multiplier 570 comprises a second input 588 which is connected with the output 590 of a decoder 592. Also the second multiplier 574 comprises a second input 594 which is connected with the output 590 of the decoder 592.

The decoder 592 comprises a first, second, third and fourth inputs 596, 598, 600 and 602. The first input 596 is connected with the output 604 of gate 582. The second input 598 is connected with a first output 606 of the second ROM 586. The third input 600 of the decoder 592 is connected with a second output 608 of the second ROM 586. The fourth input 602 is finally connected with the output 610 of the first ROM 578.

The output 612 of the first multiplier 570 is connected with the input 614 of a first output gate 616. Correspondingly, the output 618 of the second multiplier 574 is connected with the input 620 of a second output gate 622 and with the input 624 of a third output gate 626. The first output gate 616 comprises an output 628 which is connected with output line 536 of the position calculator 264. Correspondingly, the second gate 622 comprises an output 630 which is connected with output line 538 and the third gate 626 comprises an output 632 which is connected with output line 540 of the position calculator 264.

The operation of the position calculator 264 according to Fig. 8 is in light of the diagram of Fig. 9 as follows:

In a first cycle CY1 for processing of the first event $P_1$ $Z_{s1}$ is supplied to input line 534, $X_{s1}$ is supplied to input line 532 and $Y_{s1}$ is supplied to input line 530 of position calculator 264. The signal $Z_{s1}$ is transferred through multiplexer 552 and third latch 560 to gate 582 via input 580 and first ROM 578 via input 576. The signal $Z_{s1}$ passes gate 582 to decoder 592 and is then supplied from output 590 of decoder 592 via multiplier 574 and third gate 626 to output line 540 of the position calculator 264. In the first ROM 578 the inverse signal

$$\frac{1}{Z_{s1}}$$

is formed from the signal $Z_{s1}$. The inverse signal

$$\frac{1}{Z_{s1}}$$

is delivered via decoder 592 to second input 588 of the first multiplier 570 and to the second input 594 of the second multiplier 574.

The signal $Y_{s1}$ on input line 530 is transferred via first latch 544 to the first input 568 of the first multiplier 570. Correspondingly, the signal $X_{s1}$ on input line 532 is supplied via second latch 548 to the second input 572 of the second multiplier 574.

The first multiplier 570 multiplies the signal $Y_{s1}$ with the inverse signal

$$\frac{1}{Z_{s1}}$$

of first ROM 578. Correspondingly, the second multiplier 574 multiplies the signal $X_{s1}$ with the inverse signal

$$\frac{1}{Z_{s1}}.$$

The output signal

$$Y_{p1} = \frac{Y_{s1}}{Z_{s1}}$$

of the first multiplier 570 is delivered via first gate 616 to output line 536 of the position calculator 264. Correspondingly, the output signal

$$X_{p1} = \frac{X_{s1}}{Z_{s1}}$$

of the second multiplier 574 is supplied via second gate 622 to output line 538 of the position calculator 264.

In a second processing cycle CY2 for the first event $P_1$ the signals $\tau_1$, $N_1$ and $N_0$ are supplied via input line 534, multiplier 552 and third latch 560 to the first ROM 586 via input 584. The second ROM 586 comprises a look-up table for correction counts in case of a pile-up situation. In the present case there exists a pile-up situation, since the second event $P_2$ is piled-up on the first event $P_1$. Under these circumstances, starting from 2 counts have to be added to the signal $E_{s1}$ on input line 532 of the position calculator 264. For this purpose, the second ROM 586 generates a tail correction signal at first output 606 which is delivered via decoder 592 to the second input 594 of the second multiplier 574. The signal $E_{s1}$ which is supplied via second latch 548 to the first input 572 of the second multiplier 574 is multiplied by the tail correction signal and the corrected signal $E_{p1}$ is furnished from the second multiplier 574 via second output gate 622 to output line 538 of the position calculator 264.

The signal $Z_{s1}$ on input line 530 is delivered via first latch 544, first multiplier 570 and first output gate 616 to output line 536 of the position calculator 264.

For the piled-up second event $P_2$, which starts at time $\tau_2$, the position coordinate signals

$$X_{p2} = \frac{X_{s2}}{Z_{s2}} \quad \text{and} \quad Y_{p2} = \frac{X_{s2}}{Z_{s2}}$$

are calculated again in a first cycle CY1 in the same manner described above for $X_{p1}$ and $Y_{p1}$ of event $P_1$. However, the signal $E_{s2}$ has now to be corrected by subtracting the additional counts which have been added to $E_{s1}$ of the event $P_1$ in cycle CY2 of this event. For this purpose, dependent on the signals $\tau_2$, $N_2$, $N_1$ delivered to the second ROM 586 via multiplier 552 and third latch 560, the second ROM 586 at its second output 608 generates a correction signal for the signal $E_{s2}$ for tail subtraction. This correction signal is supplied via decoder 592 to second multiplier 574. The second multiplier 574 multiplies the signal $E_{s2}$ which is delivered via input line 532 and second latch 548 to second multiplier 574 with the correction signal of the second ROM 586. The corrected output signal $E_{p2}$ of the second multiplier 574 is supplied via second gate 622 to output line 538 of position calculator 264. The signal $Z_{s2}$ on input line 530 is again delivered via first latch 544, first multiplier 570 and first gate 616 to output line 536 of the position calculator 264.

All output signals on output lines 536, 538 and 540 are refed from data bus output 274 of the position calculator 264 to the data bus input 256 of the high speed processor 258. The high speed processor 258 then feeds signals $Y_{p1}$, $X_{p1}$ and $E_{p1}$ for the first event $P_1$ and signals $Y_{p2}$, $X_{p2}$ and $E_{p2}$ for the piled-up second event $P_2$ via data bus output 260 and data bus input 266 to the ZLC calculator 268 for ZL-correction.

A more detailed circuit diagram of the ZLC calculator 268 is illustrated in Fig. 10.

According to Fig. 10 the input lines 650, 652 and 654 form together the data bus input 266 of the ZLC calculator 268. Accordingly, the output lines 656, 658 and 660 form the data bus output 276 of the ZLC calculator 268. The first input line 250 is fed with the signal $Y_p$, the second input line 652 is fed by the signal $X_p$ and the third input line 654 is fed with the signal $E_p$.

After passing an input latch 662 the signals $Y_p$ and $X_p$ are delivered to the inputs 664 and 666 of a Z map gate 668. The Z map gate 668 allows for a transfer of the signals $Y_p$ and $X_p$ to output lines 656 and 658 of the ZLC calculator 268 via a first output gate 670 and a second output gate 672.

The signals $Y_p$ and $X_p$ are also supplied to a Z map ROM 674, LCY ROMs 676, LCX ROMs 678, a LCY gate 680, a LCX gate 682, a LCLY gate 684, a LCLX gate 686 and a LXLY multiplier 688, respectively.

The signal $E_p$ on line 654 is supplied via latch 662 to a LC gate 690, a Z map gate 692 and a LCf-(E) ROM 694.

An LC gate for scale factors is generally designated with 696. All elements 690 to 696 are connected with output lines 656, 658 and 660 of the ZLC calculator 268 by means of a first multiplier 698, a second multiplier 700, a first and second LC latches 702 and 704, a first and second LC gates 706 and 708, a Z map gate 710 and the first, second and a third gates 670, 672 and 712 in the manner as illustrated in Fig. 10.

The LC gate 690 allows $E_p$ to pass during linearity correction. The Z map ROM 674 contains the energy correction coefficients. The Z map gate 692 allows $E_p$ to transfer for energy correction. The LCY gate 680 correspondingly allows $Y_p$ to transfer for $Y_p$ linearity correction. The coefficients for $Y_p$ correction are stored in the LCY ROMs 676. The LCX gate 682 transfers the $X_p$ signal for linearity correction. The coefficients for the $X_p$ correction are stored in the LCX ROMs 678.

The LCLY gate 684 and the LCLX gate 686 transfer the signals $Y_p$ and $X_p$ for correction with interpolation factors. The LXLY multiplier 688 finally generates the cross product LX LY for the interpolation factors.

All corrections are digitally executed according to the same algorithms as described in US Patents 4,298,944 (Stoub et al.), 4,316,257 (DelMedico et al.) and 4,323,977 (Arseneau) for the correction of analog signals.

The energy $E_p$ is corrected in a first cycle by means of second multiplier 700. In case the corrected signal $E_{pc}$ is valid (energy window checking) the position coordinate signals $Y_p$ and $X_p$ are corrected in a second cycle by means of second multiplier 700 and first multiplier 698, respectively. All corrected signals $Y_{pc}$, $X_{pc}$, $E_{pc}$ are refed from data bus output 276 of the ZLC calculator 268 to high speed processor 258 via data bus input 256. The high speed procesor 258 then reads out the corrected signals $Y_{pc}$, $X_{pc}$, $E_{pc}$ via FIFO 272 for further processing and/or display.

Fig. 11 finally illustrates a more detailed circuit diagram of the inner structure of the dynamic threshold generator in Fig. 1A.

Having thus described the invention with particular reference to the preferred forms thereof, it will be obvious to those skilled in the art to which the invention pertains, after understanding the invention, that various changes and modifications may be made therein without departing from the spirit and scope of the invention as defined by the claims apended hereto.

## Claims

1. A method for processing pulses in pulse pile-up situations, comprising the steps of:

    a) sampling (200) each pulse with a second frequency which is a subfrequency of a first frequency;

    b) measuring (350) the start time of sampling dependent on the first and second frequencies;

    c) storing (396) the number of samples;

    d) measuring (384) the start time of a pile-up pulse dependent on the first and second frequencies;

    e) correcting (606) each pulse to be processed preceding a pile-up pulse by adding remaining tail samples dependent on the start time of sampling, the stored number of samples of the pulse until the last sample prior to the occurence of a pile-up pulse and the stored number of samples of a previously sampled pulse; and

    f) correcting (608) each pile-up pulse by subtracting the tail samples added to the preceding pulse dependent on the measured start time of the pile-up pulse, the number of samples of the pile-up pulse and the number of samples of the preceding pulse prior to the starting time of the pile-up pulse.

2. The method according to claim 1, further comprises the steps of generating (362, 368) a third frequency as a subfrequency of the first frequency and measuring the start time of sampling and the start time of a pile-up pulse dependent on the first, second and third frequencies.

3. The method according to claim 2, wherein the third frequency (368) lies between the first and second frequencies.

4. The method according to claim 1, further comprising the steps of:

    a) generating (320) a start pulse at the occurrence of a pulse to be processed;

    b) generating (338) a first pulse series having a first pulse repitition frequency at the occurrence of the start pulse;

    c) generating from the first pulse series a second pulse series having a second pulse repetition frequency (352) which is a subfrequency of the first pulse repitition frequency; and

    d) sampling (48, 200) the pulse with the second pulse repetition frequency.

5. The method according to claim 4, wherein the start time of sampling is measured (350) by measuring the status of the first and second pulse series at the occurrence of the start pulse and the start time of a pile-up pulse is measured (384) by measuring the status of the first and second pulse series at the occurrence of the pile-up pulse.

6. The method according to claim 5, further comprising the step of generating (452) a pulse pile-up signal at the occurrence of a pile-up pulse and measuring (384) the start time of a pile-up pulse by measuring the status of the first and second pulse series at the occurrence of the pulse pile-up signal.

7. The method according to claim 4, further comprising the steps of generating from the first pulse series a third pulse series (368) having a third pulse repitition frequency which is a subfrequency of the first pulse repitition frequency and measuring (350) the start time of sampling by measuring the status of the first, second and third pulse series at the occurrence of the start pulse and the start time of a pile-up pulse by measuring (384) the status of the first, second and third pulse series at the occurrence of the pile-up pulse.

8. The method according to claim 7, wherein the third pulse repitition frequency (368) lies between the first and second pulse repetition frequencies.

9. A circuit for processing pulses in pulse pile-up situations, comprising:

    a) means for sampling (200) each pulse with a second frequency which is a subfrequency of a first frequency;

    b) means for measuring (350) the start time of sampling dependent on the first and second frequencies;

    c) means for storing (396) the number of samples;

    d) means for measuring (384) the start time of a pile-up pulse dependent on the first and second frequencies;

    e) means for correcting (606) each pulse to be processed preceding a pile-up pulse by adding remaining tail samples dependent on the start time of the sampling, the stored number of samples of the pulse until the last sample prior to the occurrence of a pile-up pulse and the stored number of samples of a previously sampled pulse; and

    f) means for correcting (608) each pile-up pulse by subtracting the tail samples added to the preceding pulse dependent on the measured start time of the pile-up pulse, the number of samples of the pile-up pulse and the number of samples of the preceding pulse prior to the starting time of the pile-up pulse.

10. The circuit according to claim 9, further comprising means for gererating a third frequency (368) as a subfrequency of the first frequency and means for measuring (350, 384) the start time of sampling and the start time of a pile-up pulse dependent on the first, second and third frequencies.

11. The circuit according to claim 10, wherein the means are designated for generating the third frequency (368) between the first and second frequencies.

12. The circuit according to claim 9, further comprising:

a) means for generating (320) a start pulse at the occurrence of a pulse to be processed;

b) means for generating a first pulse series (338) having a first pulse repetition frequency at the occurrence of the start pulse;

c) means for generating from the first pulse series a second pulse series (356) having a second pulse repetition frequency which is a subfrequency of the first pulse repetition frequency; and

d) means for sampling (200) the pulse with the second pulse repetition frequency.

13. The circuit according to claim 12, comprising means for measuring the start time of sampling (350) by measuring the status of the first and second pulse series at the occurrence of the start pulse and the start time of a pile-up pulse (384) by measuring the status of the first and second pulse series at the occurrence of the pile-up pulse.

14. The circuit according to claim 12, further comprising means for generating a pulse pile-up signal (452) at the occurrence of a pile-up pulse and means for measuring the start time of a pile-up pulse (384) by measuring the status of the first and second pulse series at the occurrence of the pulse pile-up signal.

15. The circuit according to claim 14 further comprising means of generating from the first pulse series a third pulse series (362, 368) having a third pulse repetition frequency which is a subfrequency of the first pulse repetition frequency and means for measuring the start time of a sampling (350) by measuring the status of the first, second and third pulse series at the occurrence of the start pulse and the start time of a pile-up pulse (384) by measuring the status of the first, second and third pulse series at the occurrence of the pile-up pulse.

16. The circuit according to claim 15, wherein means are designated for generating the third repetition frequency (368) between the first and second pulse repetition frequencies.

17. The circuit according to claim 9, wherein the means for sampling each pulse comprises

a) an oscillator (322) for the first frequency;

b) a down counter (352) connected with the oscillator for generating the second frequency by down counting the first frequency of the oscillator; and

c) an analog-to-digital converter (200) connected with the down counter for digitalizing the pulse according to the second frequency as sample frequency.

18. The circuit according to claim 17, wherein the analog-to-digital converter (200) is part of an integrator circuit for digitally integrating signals, which comprises

a) a digital adder (202) having a first digital input for the digital output signals of the analog-to-digital converter and a second digital input and a digital output;

b) a digital storage means (204) having a digital input connected with the digital output of the adder and having a digital output connected with the second digital input of the adder; and

c) an integrator control means (46) for controlling the storage means such that each digital signal fed from the digital output of the adder to the storage means is resupplied from the digital output of the storage means to the second digital input of the adder for being added to a succeeding digital signal appearing at the first digital input of the adder.

19. The circuit according to claim 9, wherein the means for measuring the start time of sampling the start time of a pile-up pulse further comprising:

a) an oscillator (322) generating a first pulse series having a first pulse repetition frequency;

b) a down counter (356) connected with the oscillator for generating from the first pulse series a second pulse series having a second pulse repetition frequency which is a subcount of the first pulse repetition frequency;

c) a first register (350) connected with the down counter for memorizing the status of the first and second pulse series at the start time of sampling; and

d) a second register (384) connected with the down counter for memorizing the status of the first and second pulse series at the start time of a pile-up pulse.

20. The circuit according to claim 19, wherein the down counter (356) is also designed for generating a third pulse series (368) having a third pulse repetition frequency by down counting the first pulse repetition frequency of the oscillator, which third pulse repetition frequency lies between the first and second pulse repetition frequencies, and wherein the first register (350) is connected with the down counter for memorizing the status of the first, second and third pulse series at the start time of sampling and the second register (384) is connected with the down counter for memorizing the status of the first, second and third pulses at the start time of the pile-up pulse.

21. The circuit according to claim 20, wherein the oscillator (322) is a 120 MHz oscillator and the down counter is (356) is a combined 60 MHz and 30 MHz down counter, wherein 60 MHz is the third and 30 MHz is the second pulse repetition frequency.

22. The circuit according to claim 19, further comprising

    a) a logic start control (320) for generating a start pulse at the beginning of each sample; and
    b) a gate (338) connected between the oscillator and the down counter and having a start pulse input being designated for switching the first pulse series of the oscillator to the down counter at the occurrence of a start pulse.

23. The circuit according to claim 22, wherein the gate is a phase controlled gate, comprising:
a) a first transparent latch (332) having a lead input, a signal input and output;
b) a second transparent latch (334) having a lead input, a signal input and an output; and
c) an exclusive OR gate (336) having a first and second inputs and an output;
wherein the lead input of the first transparent latch is connected with an output for the start pulse of the logic start control, the signal inputs of the first and second transparent latches are connected with an output of the oscillator for the first pulse series, the output of the first transparent latch is connected with the first input of the exclusive OR gate, the output of the second transparent latch is connected with the second input of the exclusive OR gate and the output of the exclusive OR gate is connected with an input of the down counter for the first pulse series of the oscillator.

24. The circuit according to claim 19, further comprising a logic start control circuit (320) for generating a start pulse at the beginning of each sample, wherein the first register (350) comprises an enable input for the start pulse such that the status of the first, second and third pulse series are memorized at the occurrence of the start pulse.

25. The circuit according to claim 19, further comprising a means for generating a pulse pile-up detection signal (452) at the occurrence of a pile-up pulse, wherein the second register (384) comprises an enable input for the pulse pile-up detection signal such that the status of the first, second and third pulse series are memorized at the occurrence of the pulse pile-up detection signal.

26. The circuit according to claim 9, wherein the means for storing the samples comprising:
    a) a sample counter (346) connected with the means for sampling each pulse; and
    b) a storage means (396) connected with the sample counter for storing the sample count.

27. The circuit according to claim 26, wherein the storage means comprises a first (396) and second registers (400) for alternatingly storing the sample counts of the sample counter.

28. The circuit according to claim 27, further comprising:
a) a logic start control (320) for generating a start pulse at the beginning of each sampling;
b) a means for generating a pulse pile-up detection signal (452) at the occurrence of a pile-up pulse; and
c) an enable logic circuit (340) having a first enable signal output connected with an enable input of the first register and a second enable signal output connected with an enable signal input of the second register;
wherein the enable logic circuit is designated for generating alternatingly enable signals at the first and second enable outputs according to the occurring of start pulses and pulse pile-up detection signals.

29. The circuit according to claim 9, wherein the means for correcting each pulse to be processed preceding a pile-up pulse and the means for correcting each pile-up pulse comprises:
a) a storage means (586) including a look-up table for correction signals according to remaining tail samples and having an input and an output; and
b) a multiplier means (570, 574) having a first input connected with the output of the storage means and a second input connected with each pulse to be corrected for multiplying the pulses with the correction signals
wherein the input of the storage means is designated for receiving the start time of the sampling, the start time of the pile-up pulse, the stored number of samples of the pulse until the last sample prior to the occurrence of a pile-up pulse, the stored number of samples of a previously sampled pulse and the number of samples of the pile-up pulse and the look-up table is designated for delivering correction signals dependent on the start times and stored numbers of samples.

30. The circuit according to claim 29, wherein the means for storing samples comprising:
a) a sample counter (346) connected with the means for sampling each pulse; and
b) a storage means (350) connected with the sample counter for storing the sample count and having an output
wherein the output of the sample count storing means is connected with the input of storage means for correction signals.

31. The circuit according to claim 29, wherein the means for measuring the start time of sampling and the start time of a pile-up pulse further comprising;
a) an oscillator (322) generating a first pulse series having a first pulse repetition frequency;
b) a down counter (356) connected with the oscillator generating from the first pulse series a second and third pulse series having a second and third pulse repetition frequencies which are subcounts of the first pulse repetition frequency;

c) a first register (350) being connected with the down counter for memorizing the status of the first, second and third pulse series at the start time of sampling and having an output; and

d) a second register (384) being connected with the down counter for memorizing the status of the first, second and third pulse series at the start time of a pile-up pulse and having an output;

wherein the outputs of the first and second registers are connected with the input of the storage means for the correction signals.

32. A radiation detector for radiation events comprising:

a) a scintillation crystal generating scintillation events according to radiation events impinging on the scintillation crystal:

b) means (PM-1 to N) connected with scintillation crystal for converting the scintillation events to corresponding analog electrical pulses; and

c) a circuit for processing the pulses in pulse pile-up situations, comprising

c1) means for sampling (200) each pulse with a second frequency which is a subfrequency of a first frequency;

c2) means for measuring the (350) start time of sampling dependent on the first and second frequencies;

c3) means for storing (396) the number of samples;

c4) means for measuring (384) the start time of a pile-up pulse dependent on the first and second frequencies;

c5) means for correcting (606) each pulse to be processed preceding a pile-up pulse by adding remaining tail samples dependent on the start time of sampling, the stored number of samples of the pulse until the last sample prior to the occurrence of a pile-up pulse and the stored number of samples of a previously sampled pulse; and

c6) means for correcting (608) each pile-up pulse by subtracting the tail samples added to the preceding pulse dependent on the measured start time of the pile-up pulse, the number of samples of the pile-up pulse and the number of samples of the preceding pulse prior to the starting time of the pile-up pulse.

33. A radiation detector according to claim 32, comprising a scintillation gamma camera wherein the means for converting (10) the scintillation events to corresponding analog electrical signals contains means for generating a first (24) and second position (26) coordinate signals and at least a total energy signal (22), wherein the means for correcting each pulse preceding a pile-up pulse and the means for correcting the pile-up pulse are correcting the total energy signal.

FIG 1A

EP 0 424 651 A1

FIG 1B

FIG 2

FIG 3

FIG 4

FIG 5

$Y_{s2}, X_{s2}, Z_{s2}, E_{s2}$

$Y_{s1}, X_{s1}, Z_{s1}, E_{s1}$

$P_2$  $N_2$

$P_1$  $N_1$

$T_2$

$T_1$

$T$

$P$

$TH$

$t$

S1 S2 S3 S14 S15 S16 S17 S18 S19 S20 S21

S1 S2 S3 S4 S5 S6 S7 S8 S9 S10 S11 S12 S13 S14 S15 S16 S17

20

PULSE PILE – UP
DETECTOR
154

**FIG 6**

FIG 7

FIG 8

INPUT LINES     OUTPUT LINES

| | 534 | 532 | 530 |
|---|---|---|---|
| CY1 | $Z_{s1}$ | $X_{s1}$ | $Y_{s1}$ |
| CY2 | $T_1, N_1, N_0$ | $E_{s1}$ | $Z_{s1}$ |
| CY1 | $Z_{s2}$ | $X_{s2}$ | $Y_{s2}$ |
| CY2 | $T_2, N_2, N_1$ | $E_{s2}$ | $Z_{s2}$ |

| | 540 | 538 | 536 |
|---|---|---|---|
| | $Z_{s1}$ | $X_{p1} = \dfrac{X_{s1}}{Z_{s1}}$ | $Y_{p1} = \dfrac{Y_{s1}}{Z_{s1}}$ |
| | $Z_{s1}$ | $E_{p1}$ | $Z_{s1}$ |
| | $Z_{s2}$ | $X_{p2} = \dfrac{X_{s2}}{Z_{s2}}$ | $Y_{p2} = \dfrac{Y_{s2}}{Z_{s2}}$ |
| | $Z_{s2}$ | $E_{p2}$ | $Z_{s2}$ |

| | | |
|---|---|---|
| $Y_{p1}$ | $X_{p1}$ | $E_{p1}$ |
| $Y_{p2}$ | $X_{p2}$ | $E_{p2}$ |

TO    266

FIG 9

FIG 10

**FIG 11**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-166169 (SIEMENS AG.) <br> * the whole document * | 1-33 | G01T1/17 |
| A,D | US-A-3984689 (R.E. ARSENEAU) <br> * abstract; figures 1, 2A, 6 * | 1 | |

| | |
|---|---|
| | TECHNICAL FIELDS SEARCHED (Int. Cl.5 ) |
| | G01T |

The present search report has been drawn up for all claims

| Place of search | Date of completion of the search | Examiner |
|---|---|---|
| THE HAGUE | 20 FEBRUARY 1991 | BAROCCI S. |

EPO FORM 1503 03.82 (P0401)